# NEUE EUROPÄISCHE PATENTSCHRIFT

(11) **EP 1 054 309 B2**
(45) Veröffentlichungstag und Bekanntmachung des Hinweises auf die Entscheidung über den Einspruch: **28.09.2011**
(45) Hinweis auf die Patenterteilung: 14.05.2008
(21) Anmeldenummer: 00107304.8
(22) Anmeldetag: 04.04.2000
(51) Int. Cl.: G05B 19/00, G05B 19/05

(54) **Verfahren und Vorrichtung zur sicheren Übertragung von Datensignalen über ein Bussystem**
Method and apparatus for safe transmission of data on a bus system
Procédé et appareil pour la transmission sûre de données par l'intermédiaire d'un système de bus

(30) Priorität: 17.05.1999 DE 19922561
(43) Veröffentlichungstag der Anmeldung: 22.11.2000
(73) Patentinhaber: SICK AG, 79183 Waldkirch (DE)
(72) Erfinder: Dold, Franz Josef, 78120 Furtwangen (DE); Niehus, Jens, 67100 Strasbourg (FR); Geiler, Martin, 77793 Gutach (DE)
(74) Vertreter: Manitz, Finsterwald & Partner GbR

(56) Entgegenhaltungen:
- EP-A- 0 837 394
- WO-A-99/36840
- DE-A- 19 814 102
- US-A- 5 408 217
- MOHLENBEIN H: "INTERBUS-DEZENTRALE ECHTZEIT-PERIPHERIE FUER STANDARD-SPS-SYSTEME" 1990 , ELEKTRIE, VEB VERLAG TECHNIK. BERLIN, DD, VOL. 44, NR. 7, PAGE(S) 244-249 XP000162759 ISSN: 0013-5399 * Absätze [0003],[0004]; Abbildungen 3,4 *
- FLASCHKA E: "BINARE SENSOREN AM BUS MIT ASI EINE DURCHGANGIGE DATENUBERTRAGUNG BIS ZUM EINFACHEN SENSOR" 1994 , ELEKTRONIK, FRANZIS VERLAG GMBH. MUNCHEN, DE, VOL. 43, NR. 12, PAGE(S) 64-68 XP000464137 ISSN: 0013-5658 * Seite 65; Abbildungen 1,2,4 *

## Beschreibung

Die vorliegende Erfindung betrifft ein Verfahren zur sicheren Übertragung von Datensignalen über ein Bussystem, wobei die Datensignale von zumindest einem Sensor erzeugt und über das Bussystem zu mindestens einem Aktor übertragen werden. Weiterhin ist die Erfindung auf ein elektronisches Überwachungssystem mit zumindest einem Sensor und zumindest einem Aktor gerichtet, die über ein Bussystem zur Datenübertragung miteinander verbunden sind, wobei die zu übertragenden Datensignale von den Sensoren erzeugt, in das Bussystem eingespeist und von den Aktoren empfangen werden, so daß die Aktoren durch die Sensoren über das Bussystem ansteuerbar sind.

Ein solches Verfahren sowie ein solches Überwachungssystem wird beispielsweise in der Automatisierungstechnik verwendet. Mit der zunehmenden Verbreitung von Bussystemen in der Automatisierungstechnik ist es erforderlich, sicherheitsrelevante Daten beispielsweise nach der Sicherheitsnorm EN954 über diese Bussysteme übertragen zu können.

Eine Möglichkeit für eine solche sichere Übertragung besteht darin, eine Sicherheits-SPS (Speicher-Programmierbare-Steuerung) über den Datenbus mit jeweils sicheren Sensoren und Aktoren zu koppeln. Sowohl die Sicherheits-SPS als auch die sicheren Sensoren und Aktoren müssen dabei den Sicherheitsanforderungen nach EN954 entsprechen, wobei von der Sicherheits-SPS gleichzeitig Verknüpfungsaufgaben (beispielsweise OR, XOR, AND, Timer) durchgeführt werden können.

Der Artikel "Programmierbare Systeme mit Sicherheitsverantwortung" von M. Schaefer, Symposium "Maschinen und Anlagensicherheit", Lengfurt, 09.03.1999 offenbart ein nicht-sicheres Bussystem für die Übertragung von Zustandsinformation zwischen Sensoren/Aktoren und einem Steuerungssystem einer Anlage.

Nachteilig an einer solchen Konstellation sind zum einen die hohen Ansprechzeiten durch die aufwendige Kommunikation zwischen den sicheren Sensoren und der Sicherheits-SPS sowie der Sicherheits-SPS und den sicheren Aktoren und zum anderen das Erfordernis, daß anstelle einer Standard-SPS eine aufwendige Sicherheits-SPS verwendet werden muß. Weiterhin muß beim Einsatz eines Monomaster-Bussystems, d.h. eines Bussystems mit nur einem zulässigen Bus-Master, der Bus-Master ebenfalls der Sicherheitsnorm EN954 entsprechen. Die sichere SPS muß in diesem Fall sowohl Sicherheitsaufgaben als auch nicht-sichere Aufgaben lösen.

Eine weitere Möglichkeit der sicheren Übertragung besteht darin, einen Busmonitor vorzusehen, der die Datenübertragung zwischen den Sensoren und dem Bus-Master überwacht. Dabei wird den Daten jeweils vom Bus-Master eine individuelle Codierung aufgeprägt, die von dem passiven Busmonitor überprüft wird. Wird von dem Busmonitor ein Fehler in der Codierung erkannt, so werden die Aktoren entsprechend angesteuert, wodurch beispielsweise ein an die Aktoren angeschlossenes Arbeitsgerät stillgesetzt wird.

Nachteilig an einem solchen System ist, daß der Busmonitor nicht über den Bus, sondern nur direkt auf die jeweiligen Aktoren wirken kann. Dadurch ist ein zusätzlicher Verkabelungsaufwand zwischen Busmonitor und den zu schaltenden Aktoren erforderlich. Weiterhin ist der Busmonitor lediglich passiv an den Bus angeschlossen, so daß er keine Daten auf den Bus übertragen kann.

Bei der Verwendung von sicheren Sensoren ist es weiterhin möglich, daß die von den Sensoren auf den Bus gegebenen Datensignale in einer Standard-SPS verarbeitet und anschließend an die Aktoren weitergeleitet werden, wobei die Datenübertragung auf dem Bus durch eine zusätzliche Überwachungseinheit überwacht wird. In dieser Überwachungseinheit kann eine Kopie des SPS-Programms vorliegen, so daß kontinuierlich die von der Standard-SPS erzeugten Daten mit den entsprechenden durch die Überwachungseinheit erzeugten Daten verglichen werden können. Tritt bei der Datenübertragung oder in der SPS ein Fehler auf, so erkennt die Überwachungseinheit diesen Fehler und steuert den Aktor entsprechend, beispielsweise zum Abschalten eines Arbeitsgerätes, an.

Nachteilig an diesem System ist die hohe Ansprechzeit der Überwachungseinheit, die direkt von der Programmzykluszeit der SPS abhängig ist. Aufgrund dieser hohen Ansprechzeit ist dieses System für schnelle Anwendungen ungeeignet. Ein weiterer Nachteil besteht darin, daß das Sicherheitsprogramm zweimal, nämlich einmal in der SPS und einmal als Kopie in der Überwachungseinheit, erstellt werden muß, wobei darüber hinaus beide Programme vollständig synchron ablaufen müssen.

Da die Überwachungseinheit nur direkt auf den Aktor wirken kann, ist auch bei dieser Lösung zusätzlicher Verkabelungsaufwand zwischen der Überwachungseinheit und den zu schaltenden Aktoren erforderlich.

Es ist einer Aufgabe der Erfindung ein Verfahren sowie ein Überwachungssystem der eingangs genannten Art so auszubilden, daß eine sichere Datenübertragung zwischen den Sensoren und den Aktoren, nach der Sicherheitsnorm EN954, gewährleistet ist, wobei gleichzeitig auf eine aufwendige Sicherheits-SPS sowie auf zusätzliche Verkabelung zu den Aktoren verzichtet werden kann.

Der das Verfahren betreffende Teil der Aufgabe wird ausgehend von einem Verfahren der eingangs genannten Art erfindungsgemäß durch die Merkmale des Anspruchs 1 gelöst.

Der das Überwachungssystem betreffende Teil der Aufgabe wird ausgehend von einem Überwachungssystem der eingangs genannten Art erfindungsgemäß durch die Merkmale des Anspruchs 6 gelöst.

Erfindungsgemäß erfolgt somit eine sichere Kommunikation jeweils direkt zwischen Sensor und Aktor. Durch die Codierung werden die Daten vor Einspeisen in das Bussystem "sicher" erzeugt, anschließend vom Bus-Master "nicht-sicher" zu dem jeweiligen Aktor weitergeleitet und erst im Aktor durch die Decodierung "sicher" überprüft.

Die Sicherheitsmaßnahmen beschränken sich somit auf die "sicheren Aktoren" und "sicheren Sensoren" (sicher nach EN954), so daß eine aufwendige Sicherheits-SPS entfallen kann. Somit bleibt das erfindungsgemäß System unabhängig von der nicht-sicheren Kommunikation der Standardkomponenten auf dem Bussystem.

Da die Datensicherung in den Endkomponenten, d.h. in den Sensoren bzw. den Aktoren stattfindet, kann die Übertragung der Datensignale durch den Bus-Master über das Bussystem direkt und unbearbeitet in nicht-sicherer Weise erfolgen. Eine sicherheitsrelevante Verarbeitung der Datensignale in der Standard-SPS findet somit nicht statt.

Die sicherheitsgerichtete Zuordnung bzw. Verbindung zwischen den Endgeräten, beispielsweise zwischen zwei beliebigen Sensoren, Aktoren, oder Sicherheitsschaltgeräten, die als Eingangs- oder Ausgangskomponenten am Bussystem arbeiten können, kann in diesen sicheren Endkomponenten mit einer eventuellen Vorverarbeitung stattfinden. Dabei können Verknüpfungen wie beispielsweise AND, OR, XOR oder Timer realisiert sein.

Ein weiterer Vorteil der Erfindung liegt darin, daß bestehende, nicht-sichere Buskomponenten mit entsprechenden sicheren Sensoren und Aktoren nachgerüstet werden können, ohne daß die nicht-sicheren Buskomponenten modifiziert werden müssen. Der Bus-Master hat lediglich die Aufgabe, die Daten vom sicheren Sensor zu dem jeweiligen sicheren Aktor zu kopieren. Bei Multimaster-Bussystemen entfällt sogar die Datenweiterleitung durch den Bus-Master, da die sicheren Endkomponenten sich gegenseitig direkt ansprechen.

Da die komplexen Vernetzungsaufgaben dezentral gelöst werden, ist keine zusätzliche Parallelverdrahtung zu den Aktoren erforderlich, so daß die typischen Vorteile eines Bussystemsn nämlich reduzierter Verkabelungsaufwand, eine höhere Diagnostizierbarkeit sowie ein geringerer Projektierungsaufwand gegeben sind.

Da keine aufwendige Sicherheits-SPS erforderlich ist, besitzt ein erfindungsgemäß ausgebildetes Überwachungssystem sehr kurze Ansprechzeiten, so daß es auch für den Einsatz in zeitkritischen Anwendungen geeignet ist.

Die Erfindung ist bei beliebigen, bevorzugt bei folgenden Systemen einsetzbar: Interbus, CAN-basierende Bussysteme, Ethernet-Bussysteme insbesondere mit TCP/IP-Protokoll, Internetsysteme, Profibus und ASI-Bus.

Bevorzugt werden die codierten Datensignale transparent über das Bussystem übertragen. Dabei wird vorteilhaft im Falle einer fehlerhaften Decodierung der entsprechende Aktor in einen Fehlerzustand gebracht, insbesondere eine von dem Aktor gesteuerter Einrichtung abgeschaltet. Dadurch wird beispielsweise erreicht, daß bei Unterbrechen einer von einer Vielzahl von Lichtschranken durch Eindringen eines Objektes in einen Überwachungsbereich ein sicherheitskritisches Arbeitsgerät automatisch abgeschaltet wird.

Nach einer vorteilhaften Ausführungsform der Erfindung erfolgt die Codierung unmittelbar durch den jeweiligen Sensor und/die Decodierung unmittelbar durch den jeweiligen Aktor. Auf diese Weise ist eine kompakte Ausbildung eines erfindungsgemäß ausgebildeten Überwachungssystems möglich. Grundsätzlich ist es jedoch auch möglich, daß die von den jeweiligen Sensoren erzeugten Signale durch eine separate Codiereinheit vor Einspeisen in das Bussystem codiert und/oder daß die über das Bussystem übertragenen codierten Datensignale von einer separaten Decodiereinheit decodiert und an den jeweiligen Aktor weitergeleitet werden.

Sowohl das jeweilige Sicherheitscodierverfahren für jeden Sensor und/oder Aktor als auch die jeweiligen Zuordnungen bzw. Vernetzungsaufgaben der einzelnen Sensoren oder Aktoren kann erfindungsgemäß für jeden Sensor und/oder Aktor variabel programmiert werden. Dabei ist eine beliebige Anzahl von Kombinationen der jeweiligen Endgeräte möglich. Die Übertragung der Konfigurationsdaten kann dabei von einer Programmiereinheit durch direkten Anschluß an den Bus oder über die Standard-SPS und den an diese angeschlossenen Bus zu der jeweiligen Endkomponente erfolgen.

Weitere vorteilhafte Ausführungsformen der Erfindung sind in den Unteransprüchen angegeben.

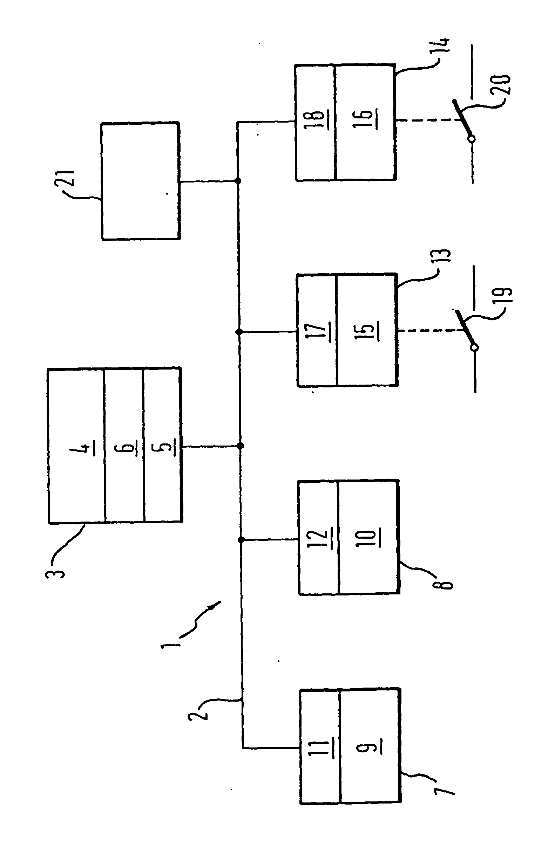

Die Erfindung wir nachfolgend anhand eines Ausführungsbeispiels unter Bezugnahme auf die einzige Zeichnung näher beschrieben.

Die Figur zeigt ein Bussystem 1, das einen Datenbus 2 sowie eine Bussteuerung 3 umfaßt. Die Bussteuerung 3 umfaßt eine Standard-SPS (Speicher-Programmierbare-Steuerung) 4, einen Bus-Master 5 sowie eine Datenkopiereinheit 6, mit der die von der SPS 4 erzeugten Daten dem Bus-Master 5 zugeführt werden. Über den Bus-Master 5 ist die SPS 4 zur Steuerung des Datenverkehrs auf dem Datenbus 2 mit diesem verbunden.

An dem Datenbus 2 sind weiterhin Sensoren 7, 8 angeschlossen, die schematisch dargestellt jeweils aus der eigentlichen Sensoreinheit 9, 10 und einer jeweiligen Sicherheitscodiereinheit 11, 12 bestehen. Die Sicherheitscodiereinheiten 11, 12 sind dabei beispielsweise durch Software-Sicherheitlayer realisiert, durch die eine Codierung der von den Sensoren 7, 8 erzeugten Datensignale vor Einspeisen in das Bussystem 1 erfolgt. Zur Datensicherung können in den Sicherheitslayern unterschiedliche Sicherheitsmechanismen wie beispielsweise eine Prüfsummenbildung (CRC), eine laufende Nummer, Zeiterwartung mit Quittierung oder eine Quelle-Ziel-Beziehung vorgesehen sein.

Die Übertragung der codierten Datensignale kann auf dem Datenbus 2 beispielsweise mit einer Datenbreite von 8 Byte erfolgen, wobei z. B. 4 Byte für die Nutzdaten und 4 Byte für die Sicherheitsmaßnahmen verwendet werden können.

An den Datenbus 2 sind weiterhin zwei Aktoren 13, 14 angeschlossen, die jeweils aus den eigentlichen Aktoreinheiten 15, 16 sowie Sicherheitsdecodiereinheiten 17, 18 bestehen. Die Sicherheitsdecodiereinheiten können wie bei den Sensoren 7, 8 beispielsweise als Software-Sicherheitslayer realisiert sein, durch die die von den Sicherheitscodiereinheiten 11, 12 codierten und über den Datenbus 2 übertragenen Datensignale decodiert werden können.

Über die Aktoren 13, 14 sind beliebige Endgeräte ansteuerbar, wie es schematisch durch zwei Schalter 19, 20 angedeutet ist. Insbesondere können auf diese Weise bei Ansprechen der Sensoren 7, 8, beispielsweise bei Unterbrechung eines Lichtstrahls einer Lichtschranke, sicherheitskritische Arbeitsgeräte automatisch stillgesetzt werden.

An das Bussystem 1 ist weiterhin eine Programmiereinheit 21, beispielsweise in Form eines Personal-Computers, angeschlossen, durch die die Sicherheitscodiereinheiten 11, 12 sowie die Sicherheitsdecodiereinheiten 17, 18 programmiert werden können. Dabei können zum einen die verwendeten Codierverfahren in den Sicherheitscodiereinheiten 11, 12 sowie den Sicherheitsdecodiereinheiten 17, 18 abgespeichert werden und zum anderen können die erforderlichen Verknüpfungen der Sicherheitskomponenten festgelegt werden.

Über die Programmiereinheit 21 können beispielsweise zunächst alle relevanten Sicherheitskomponenten identifiziert und durch Konfiguration mit ihren jeweiligen Sicherheitsaufgaben (Muting, Schutztürüberwachung, Blanking, Not-Aus) versehen werden. Dies kann durch vordefinierte Funktionsbausteine erfolgen. Die erforderlichen Verknüpfungen der Sicherheitskomponenten (z.B. AND, OR, XOR, Timer) können beispielsweise über einen Netzwerkeditor erstellt werden. Aus den Parametrierungsdaten und den Netzwerkdaten kann durch die Programmierlogik der Programmiereinheit 21 dann für jede Sicherheitskomponente ein Aufgabenpaket erstellt werden, das über den Datenbus jeder Komponente, d.h. den Sensoren 7, 8 bzw. den Aktoren 13, 14 zugeteilt wird. Auf diese Weise ist eine automatische Verteilung der Sicherheitsaufgaben im Gesamtsystem möglich.

Durch die Verwendung einer Programmiereinheit 21 ist eine völlig variable Definition der Verknüpfungsaufgaben möglich. Beispiele für Verknüpfungsaufgaben sind:
1. Sensor 7 und Sensor 8 wirken auf Aktor 13,
2. Sensor 7 wirkt auf Aktor 13 und auf Aktor 14,
3. Sensor 7 und Sensor 8 und ein nicht dargestelltes Schaltgerät wirken auf Aktor 13 und Aktor 14.

Die Aktoren überwachen entsprechend der programmierten Aufgabe nur die ihnen zugeteilten Sensoren mit den entsprechenden Daten. Die Auswertung der Verknüpfungsaufgaben erfolgt für Beispiel 1 in den Aktoren für Beispiel 2 in den Sensoren. Wie in Beispiel 3 gezeigt, sind auch Kombinationen möglich, so daß die Auswertungen sowohl in den Sensoren als auch in den Aktoren erfolgen. Mit dem erfindungsgemäßen System ist die Anzahl der Kommunikations- und somit auch der Sicherheitsbeziehungen auf dem Bussystem 1 beliebig und nur durch die Leistungsdaten des Bussystems 1 begrenzt.

Durch die beschriebenen Sicherheitsmaßnahme sind Fehler wie Datenwiederholung, Verlust, Einfügung, falsche Abfolge, Verfälschung, Verzögerung und Kopplung von nicht sicherheitsrelevanten Daten mit sicherheitsrelevanten Daten beherrschbar. Wahlweise können die Sicherheitsverknüpfungen entweder im Sicherheitslayer erfolgen oder alternativ oder zusätzlich in der Software der sicheren Endkomponenten realisiert werden.

Der Bus-Master 5 hat die Aufgabe der Organisation der Daten bzw. die Weiterleitung der Daten zwischen den sicheren Eingangs- und Ausgangskomponenten. Diese Datenorganisation kann in Software, programmierbarer Hardware oder auch direkt im ASIC des Bus-Masters 5 erfolgen. Diese Datenorganisation bzw. -Weiterleitung kann dabei in ungesicherter Weise erfolgen, da die Datensicherung unmittelbar in den Endkomponenten 7, 8, 13, 14 stattfindet.

### Bezugszeichenliste

- 1: Bussystem
- 2: Datenbus
- 3: Bussteuerung
- 4: Standard-SPS
- 5: Bus-Master
- 6: Datenkopiereinheit
- 7: Sensor
- 8: Sensor
- 9: Sensoreinheit
- 10: Sensoreinheit
- 11: Sicherheitscodiereinheit
- 12: Sicherheitscodiereinheit
- 13: Aktor
- 14: Aktor
- 15: Aktoreinheit
- 16: Aktoreinheit
- 17: Sicherheitsdecodiereinheit
- 18: Sicherheitsdecodiereinheit
- 19: Schalter
- 20: Schalter
- 21: Programmiereinheit

## Patentansprüche

1. Verfahren zur sicheren Übertragung von Datensignalen über ein Bussystem (1), wobei die Datensignale von zumindest einem Sensor (7, 8) erzeugt und über das Bussystem (1) zu mindestens einem Aktor (13, 14) übertragen werden,
wobei die von zumindest einem der Sensoren (7, 8) erzeugten Datensignale vor Einleitung in das Bussystem (1) gemäß einem vorgegebenen Sicherheitscodierverfahren entsprechend den Anforderungen der Sicherheitsnorm EN 954 codiert werden, wobei die codierten Datensignale in das Bussystem (1) eingespeist und über dieses in nicht-sicherer Weise, d.h. ohne sicherheitsrelevante Verarbeitung der Datensignale übertragen werden, wobei die codierten Datensignale von zumindest einem der Aktoren (13, 14) empfangen und gemäß einem dem vorgegebenen Sicherheitscodierverfahren entsprechenden Decodierverfahren decodiert werden, so dass eine direkte und sichere Kommunikation zwischen den Sensoren (7, 8) und den Aktoren (13, 14) erfolgt, wobei die Übertragung der codierten Datensignale über das Bussystem (1) von einer programmierbaren Steuereinheit (4) (SPS = Speicher-Programmierbare-Steuerung) gesteuert wird, und wobei die Steuereinheit (4) als nicht-sichere Standard-SPS ausgebildet ist.

2. Verfahren nach Anspruch 1,
**dadurch gekennzeichnet,**
**daß** die codierten Datensignale über das Bussystem (1) transparent übertragen werden und/oder
**daß** im Falle einer fehlerhaften Decodierung der entsprechende Aktor (13, 14) in einen Fehlerzustand gebracht wird, insbesondere daß eine von dem Aktor (13, 14) gesteuerte Einrichtung (19, 20) abgeschaltet wird.

3. Verfahren nach einem der vorhergehenden Ansprüche,
**dadurch gekennzeichnet,**
**daß** die Codierung unmittelbar durch den jeweiligen Sensor (7, 8) erfolgt und/oder
**daß** die Decodierung unmittelbar durch den jeweiligen Aktor (13, 14) erfolgt und/oder
**daß** das jeweilige Sicherheitscodierverfahren für jeden Sensor (7, 8) und/ oder Aktor (13, 14) einstellbar ist.

4. Verfahren nach einem der vorhergehenden Ansprüche,
**dadurch gekennzeichnet,**
**daß** zumindest ein Teil der Sensoren (7, 8) und Aktoren (13, 14) jeweils programmierbar sind und variabel einander zugeordnet werden und/oder
**daß** für die Übertragung der Datensignale über das Bussystem (1) eine vorgegebene Anzahl von Bits oder Bytes verwendet wird und daß ein Teil der Bits oder Bytes für die Codierung der Datensignale verwendet wird.

5. Verfahren nach einem der vorhergehenden Ansprüche,
**dadurch gekennzeichnet, daß**
das Bussystem (1) nach dem Master-Slave-Prinzip arbeitet und die Sensoren (7, 8) und/oder die Aktoren (13, 14) die Slaves und die SPS (4) den Master bilden.

6. Elektronisches Überwachungssystem mit zumindest einem Sensor (7, 8) und zumindest einem Aktor (13, 14), die über ein Bussystem (1) zur Datenübertragung miteinander verbunden sind, wobei die zu übertragenden Datensignale von den Sensoren (7, 8) erzeugt, in das Bussystem (1) eingespeist und von den Aktoren (13, 14) empfangen werden, so dass die Aktoren (13, 14) durch die Sensoren (7, 8) über das Bussystem (1) ansteuerbar sind, insbesondere zur Durchführung des Verfahrens nach einem der vorhergehenden Ansprüche,
wobei zumindest einem Teil der Sensoren (7, 8) jeweils eine Sicherheitscodiereinheit (11, 12) zugeordnet ist, mit der die von dem jeweiligen Sensor (7, 8) erzeugten Datensignale vor Einspeisung in das Bussystem (1) gemäß einem vorgegebenen Sicherheitscodierverfahren entsprechend den Anforderungen der Sicherheitsnorm EN 954 codierbar sind, wobei das Bussystem (1) zur nichtsicheren Übertragung der codierten Datensignale, d.h. zur Übertragung der Datensignale ohne sicherheitsrelevante Verarbeitung ausgebildet ist, wobei zumindest einem Teil der Aktoren (13, 14) jeweils eine Sicherheitsdecodiereinheit zugeordnet ist, mit der zur Erzeugung einer direkten und sicheren Kommunikation zwischen den Sensoren (7, 8) und den Aktoren (13, 14) die über das Bussystem (1) zu dem jeweiligen Aktor (13, 14) übertragenen codierten Datensignale decodierbar sind, und wobei das Bussystem (1) durch eine programmierbare Steuereinheit (4) (SPS = SpeicherProgrammierbare-Steuerung) steuerbar ist, die als nicht-sichere Standard-SPS ausgebildet ist.

7. Überwachungssystem nach Anspruch 6,
**dadurch gekennzeichnet,**
**daß** das Bussystem (1) zur transparenten Übertragung der codierten Datensignale ausgebildet ist und/oder
**daß** die Sicherheitscodiereinheit (11, 12) jeweils unmittelbar in den Sensor (7, 8) integriert ist und/oder
**daß** die Sicherheitsdecodiereinheit (17, 18) jeweils unmittelbar in den Aktor (13, 14) integriert ist.

8. Überwachungssystem nach Anspruch 6 oder 7,
**dadurch gekennzeichnet,**
**daß** die Sicherheitscodiereinheit (11, 12) durch eine insbesondere programmierbare Steuereinheit des Sensors (7, 8) gebildet wird und/oder
**daß** die Sicherheitsdecodiereinheit (17, 18) durch eine insbesondere programmierbare Steuereinheit des Aktors (13, 14) gebildet wird.

9. Überwachungssystem nach einem der Ansprüche 6 bis 8,
**dadurch gekennzeichnet, daß**
das Bussystem (1) nach dem Master-Slave-Prinzip arbeitet und die Sensoren und/oder die Aktoren die Slaves und die SPS den Master bilden.

10. Überwachungssystem nach Anspruch 8 oder 9,
**dadurch gekennzeichnet,**
**daß** an das Bussystem (1) eine insbesondere zentrale Programmiereinheit (21) angeschlossen oder anschließbar ist, über die die programmierbaren Steuereinheiten der Sensoren (7, 8) und/oder der Aktoren (13, 14) programmierbar sind.

## Claims

1. A method for the secure transmission of data signals over a bus system (1), wherein the data signals are generated by at least one sensor (7, 8) and are transmitted over the bus system (1) to at least one actuator (13, 14),
wherein the data signals generated by at least one of the sensors (7, 8) are encoded in accordance with a predetermined security encoding method in accordance with the requirements of security standard EN 954 before being introduced into the bus system (1); wherein the encoded data signals are fed into the bus system (1) and are transmitted over it in a non-secure manner, i.e. without any security relevant processing of the data signals; and wherein the encoded data signals are received by at least one of the actuators (13, 14) and are decoded in accordance with a decoding method corresponding to the predetermined security encoding method so that a direct and secure communication takes place between the sensors (7, 8) and the actuators (13, 14); wherein the transmission of the encoded data signals over the bus system (1) is controlled by a programmable control unit (4) (SPS = memory programmable control); and wherein the control unit (4) is made as a non-secure standard SPS.

2. A method according to claim 1 **characterized in that** the encoded data signals are transmitted in a transparent manner over the bus system (1); and/or **in that**, in the event of a faulty decoding, the corresponding actuator (13, 14) is put into an error state; in particular **in that** a device (19, 20) controlled by the actuator (13, 14) is shut down.

3. A method according to any one of the preceding claims, **characterized in that** the encoding is performed directly by the respective sensor (7, 8); and/or **in that** the decoding is performed directly by the respective actuator (13, 14); and/or **in that** the respective security encoding method can be set for each sensor (7, 8) and/or actuator (13, 14).

4. A method according to any one of the preceding claims, **characterized in that** at least some of the sensors (7, 8) and actuators (13, 14) are each programmable and are variably allocated to one another; and/or **in that** a predetermined number of bits or bytes are used for the transmission of the data signals over the bus system (1); and **in that** some of the bits or bytes are used for the encoding of the data signals.

5. A method according to any one of the preceding claims, **characterized in that** the bus system (1) operates according to the master-slave principle and the sensors (7, 8) and/or the actuators (13, 14) form the slaves and the SPS (4) forms the master.

6. An electronic monitoring system comprising at least one sensor (7, 8) and at least one actuator (13, 14) which are connected to one another via a bus system (1) for data transmission, wherein the data signals to be transmitted are generated by the sensors (7, 8), are fed into the bus system (1) and are received by the actuators (13, 14) so that the actuators (13, 14) can be controlled by the sensors (7, 8) via the bus system, in particular for the carrying out of the method according to of any one of the preceding claims,
wherein a respective security encoding unit (11, 12) is associated with at least some of the sensors (7, 8) and the data signals generated by the respective sensor (7, 8) can be encoded by said security encoding unit in accordance with a predetermined security encoding method in accordance with the requirements of security standard EN 954 before being fed into the bus system (1); wherein the bus system (1) is designed for the non-secure transmission of the encoded data signals, i.e. for the transmission of the data signals without a safety relevant processing; and wherein a respective security decoding unit is associated with at least some of the actuators (13, 14) and the encoded data signals transmitted to the respective actuator (13, 14) over the bus system (1) can be decoded using said security decoding unit for the generation of a direct and secure communication between the sensors (7, 8) and the actuators (13, 14); and wherein the bus system (1) is controllable by a programmable control unit (4) (SPS = memory programmable control), which is made as a non-secure standard SPS.

7. A monitoring system according to claim 6, **characterized in that** the bus system (1) is designed for the transparent transmission of the encoded data signals; and/or **in that** the security encoding unit (11, 12) is in each case directly integrated into the sensor (7, 8); and/or in that the security decoding unit (17, 18) is in each case directly integrated into the actuator (13, 14).

8. A monitoring system according to claim 6 or claim 7, **characterized in that** the security encoding unit (11, 12) is formed by a control unit, in particular a programmable control unit, of the sensor (7, 8); and/or **in that** the security decoding unit (17, 18) is formed by a control unit, in particular a programmable control unit, of the actuator (13, 14).

9. A monitoring system according to any one of the claims 6 to 8, **characterized in that** the bus system (1) operates according to the master-slave principle and the sensors and/or the actuators form the slaves and the SPS forms the master.

10. A monitoring system according to claim 8 or claim 9, **characterized in that** the bus system (1) is or can be connected to a programming unit (21), in particular a central programming unit, via which the programmable control units of the sensors (7, 8) and/or of the actuators (13, 14) can be programmed.

## Revendications

1. Procédé pour la transmission sûre de signaux de données via un système de bus (1), dans lequel les signaux de données sont produits par au moins un capteur (7, 8) et transmis via le système de bus (1) à au moins un acteur (13, 14),
dans lequel les signaux de données produits par ledit au moins un capteur (7, 8) sont codés avant l'injection dans le système de bus (1) selon un procédé de codage de sécurité prédéterminé correspondant aux exigences de la norme de sécurité EN 954, dans lequel les signaux de données codés sont injectés dans le système de bus (1) et transmis via celui-ci d'une manière non sûre, c'est-à-dire sans traitement de sécurité des signaux de données, et dans lequel les signaux de données codés sont reçus par l'un au moins des acteurs (13, 14) et décodés selon un procédé de décodage correspondant au procédé de codage de sécurité prédéterminé, de sorte qu'une communication directe et sûre a lieu entre les capteurs (7, 8) et les acteurs (13, 14), dans lequel la transmission des signaux de données codés via le système de bus (1) est commandée par une unité de commande programmable (4) (commande à mémoire programmable = CMP), et dans lequel l'unité de commande (4) est réalisée sous forme de CMP standard non sûre.

2. Procédé selon la revendication 1,
**caractérisé en ce que** les signaux de données codés sont transmis de façon transparente via le système de bus (1), et/ou
**en ce que** dans le cas d'un décodage défectueux l'acteur correspondant (13, 14) est amené dans un état d'erreur, en particulier **en ce qu'**un système (19, 20) commandé par l'acteur (13, 14) est mis à l'arrêt.

3. Procédé selon l'une des revendications précédentes,
**caractérisé en ce que** le codage a lieu directement par le capteur respectif (7, 8), et/ou
**en ce que** le décodage a lieu directement par l'acteur respectif (13, 14), et/ou
**en ce que** le procédé de codage de sécurité respectif pour chaque capteur (7, 8) et/ou acteur (13, 14) est réglable.

4. Procédé selon l'une des revendications précédentes,
**caractérisé en ce qu'**au moins une partie des capteurs (7, 8) et des acteurs (13, 14) sont respectivement programmables et sont associés de façon variable les uns aux autres, et/ou
**en ce que** pour la transmission des signaux de données via le système de bus (1) on utilise un nombre prédéterminé de bits ou d'octets, et **en ce qu'**une partie des bits ou des octets est utilisée pour le codage des signaux de données.

5. Procédé selon l'une des revendications précédentes,
**caractérisé en ce que** le système de bus (1) fonctionne selon le principe maître/esclave, et **en ce que** les capteurs (7, 8) et/ou les acteurs (13, 14) forment les esclaves et l'unité CMP (4) forme le maître.

6. Système de surveillance électronique comprenant au moins un capteur (7, 8) et au moins un acteur (13, 14), qui sont reliés les uns aux autres via un système de bus (1) pour la transmission de données, dans lequel les signaux de données à transmettre sont produits par les capteurs (7, 8), injectés dans le système de bus (1), et reçus par les acteurs (13, 14), de sorte que les acteurs (13, 14) sont pilotables par les capteurs (7, 8) via le système de bus (1), en particulier pour mettre en oeuvre le procédé selon l'une des revendications précédentes,
dans lequel, à une partie au moins des capteurs (7, 8), est associée une unité de codage de sécurité respective (11, 12) au moyen de laquelle les signaux de données produits par le capteur respectif (7, 8) peuvent être codés avant l'injection dans le système de bus (1) selon un procédé de codage de sécurité prédéterminé correspondant aux exigences de la norme de sécurité EN 954, dans lequel le système de bus (1) est réalisé pour la transmission non sûre des signaux de données codés, c'est-à-dire pour la transmission des signaux de données sans traitement de sécurité, et dans lequel, à une partie au moins des acteurs (13, 14), est associée respectivement une unité de décodage de sécurité au moyen de laquelle, pour engendrer une communication directe et sûre entre les capteurs (7, 8) et les acteurs (13, 14), les signaux de données codés transmis via le système de bus (1) à l'acteur respectif (13, 14) peuvent être décodés, dans lequel le système de bus (1) est susceptible d'être commandé par une unité de commande programmable (4) (commande à mémoire programmable = CMP), qui est réalisé sous forme de CMP standard non sûre.

7. Système de surveillance selon la revendication 6,
**caractérisé en ce que** le système de bus (1) est réalisé pour la transmission transparente des signaux de données codés, et/ou en ce que l'unité de codage de sécurité (11, 12) est intégrée respectivement directement dans le capteur (7, 8), et/ou en ce que l'unité de décodage de sécurité (17, 18) est intégrée respectivement directement dans l'acteur (13, 14).

8. Système de surveillance selon la revendication 6 ou 7,
**caractérisé en ce que** l'unité de codage de sécurité (11, 12) est formée par une unité de commande, en particulier programmable, du capteur (7, 8), et/ou
**en ce que** l'unité de décodage de sécurité (17, 18) est formé par une unité de commande, en particulier programmable, de l'acteur (13, 14).

9. Système de surveillance selon l'une des revendications 6 à 8,
**caractérisé en ce que** le système de bus (1) fonctionne selon le principe maître/esclave, et les capteurs et/ou les acteurs forment les esclaves et l'unité CMP forme le maître.

10. Système de surveillance selon la revendication 8 ou 9,
**caractérisé en ce qu'**une unité de programmation (21), en particulier centrale, est raccordé au système de bus (1) ou susceptible de l'être, via laquelle les unités de commande programmables des capteurs (7, 8) et/ou des acteurs (13, 14) sont programmables.
